(19) Europäisches Patentamt
European Patent Office
Office européen des brevets

(11) **EP 1 636 541 B1**

(12) **EUROPEAN PATENT SPECIFICATION**

(45) Date of publication and mention
of the grant of the patent:
**04.12.2013   Bulletin 2013/49**

(51) Int Cl.:
***G01B 11/06*** (2006.01)

(21) Application number: **03817216.9**

(86) International application number:
**PCT/KR2003/001234**

(22) Date of filing: **24.06.2003**

(87) International publication number:
**WO 2004/113829 (29.12.2004 Gazette 2004/53)**

(54) **METHOD FOR MEASURING THICKNESS OF AN OPTICAL DISC**

VERFAHREN ZUR MESSUNG DER DICKE EINES OPTISCHEN DATENTRÄGERS

PROCEDE DE MESURE DE L'EPAISSEUR D'UN DISQUE OPTIQUE

(84) Designated Contracting States:
**AT BE BG CH CY CZ DE DK EE ES FI FR GB GR HU IE IT LI LU MC NL PT RO SE SI SK TR**

(30) Priority: **20.06.2003   KR 2003040312**

(43) Date of publication of application:
**22.03.2006   Bulletin 2006/12**

(60) Divisional application:
**07018404.9 / 1 873 482**

(73) Proprietor: **LG Electronics, Inc.**
**Seoul 150-010 (KR)**

(72) Inventors:
 • **JEONG, Seong Yun**
  **Seoul 137-724 (KR)**
 • **KIM, Jin Yong,**
  **109-602, Sunkyung APT.**
  **Seongnam-si,**
  **463-070 Gyeonggi-do (KR)**
 • **KIM, Jin Hong**
  **Yongin-si,**
  **449-749 Gyeonggi-do (KR)**
 • **SEO, Hun**
  **Yongin-si,**
  **449-767 Gyeonggi-do (KR)**
 • **KWAK, Keum Cheol**
  **Dongdaemun-gu, 130-871 Seoul (KR)**

(74) Representative: **Diehl & Partner GbR**
**Patentanwälte**
**Erika-Mann-Strasse 9**
**80636 München (DE)**

(56) References cited:
**WO-A1-03/025497      US-A1- 2002 163 649**
**US-B1- 6 172 756      US-B1- 6 236 459**

 • **LANGE V.; VIERTL B.; HIGELIN G.: "REFLEXIONSINTERFEROMETRIE ZUR KONTROLLE DUENNER SILIZIUM-MEMBRANEN", TECHNISCHES MESSEN TM, vol. 61, no. 9, September 1994 (1994-09), pages 346-351, XP000465894, R.OLDENBOURG VERLAG. MUNCHEN, DE**

## Description

### Technical Field

The present invention relates to a method for measuring thickness of an optical disc, and more particularly, to a method for measuring thickness of an optical disc from a position of a peak value of a reflective light in an interference area obtained from Fast Fourier Transform (hereinafter referred to as FFT) of a reflective spectrum at an axis being reflected by a reflective index as a function of wavelength.

### Background Art

Until the present, there are recording media such as a magnetic recording tape, a Laser Disc (LD) and a Compact Disc (CD) as optical discs, and a Digital Video Disc (hereinafter referred to as DVD) with a vast information recoding capacity. Since the optical disc among the recording media utilizes a digital recording system different from previous magnetic recording tape and has very small volume and a light weight, the optical disc is convenient to keep and carry so that a user prefers the optical disc more other recording medium.

Moreover, according to a trend of high density and high integration together with development of industry, a Blu-ray_Disc (BD) as a High Density DVD (HD-DVD) with integration higher than the present DVD is under investigation and development. However, any product should be used without error, and if the quality of the product deteriorates, a maker who manufactures the product loses his reliability. This case causes more series problem in the optical disc having minute signal characteristics and brings inferior quality originated from error of thickness of a disc, scratch, deformity, fingerprint, and attachment of foreign material during manufacturing of the product.

More especially, the thickness of a disc is a major factor affecting the productivity and the reliability, and it is necessary to measure the thickness in real time for processing control in manufacturing process.

The optical disc can be treated as a thin film. If the thickness of the thin film is under several $\mu$m, the measurement of the thickness depends on a quantitative measurement such as a thin film analysis by ellipsometry and measurement of reflection factor, and if the thickness of a relative thick thin film equal to and greater that several $\mu$m is analyzed, it is used a measurement method for measuring thickness from a vibration period appeared in a reflective or transparent spectrum due to a interference effect by the thin film.

At that time, the wavelength resolving or the coherency of a monochromator deteriorates, but there is a valuable use of a method for obtaining a vibration period (or frequency) of the spectrum by the interference and determining the thickness of the thin film from the obtained vibration period. However, if thick thin film, since necessary time to estimated the thickness of the thin film increases because of appearance of a value with large period. In order to response to demands from the industries to wish to rapidly measure the thickness of the thick thin film, the conventional FFT is utilized as a rapid measurement for the vibration period of the spectrum.

Patent document US 6, 172, 756 B2 discloses a method for film measurement by use of spectral analysis of intensity data derived from light reflected off the sample to estimate the film thickness. The method comprises the calculation of a power spectral density, PSD, function.

The article "Reflexionsinterferometrie zur Kontrolle dünner Silizium-Membranen" by Volker Lange et al., Technisches Messen 61 (1994) 9, pages 346-351, discloses a method of using NIR radiation for the determination of the thickness of single layer Si films.

International application WO 03/025497 A1 discloses a method for measuring thickness profiles of multiple layers of thin films by the principle of reflectometry, the method involving a minimization of reflectivity error by using a trial-and-error method.

### Disclosure of Invention

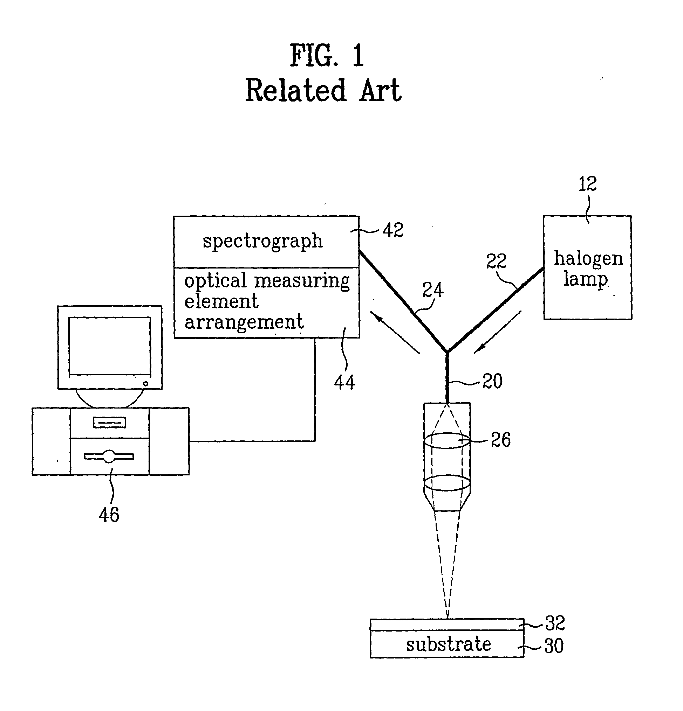

Fig. 1 illustrates a schematic construction of the conventional apparatus for measuring the thickness of a thin film.

As illustrated in FIG. 1, according to the apparatus for measuring the thickness of the thin film by measuring a reflectivity spectrum, the light from a halogen lamp 12 is projected on a substrate 30 with a thin film 32 through one 22 of optical fibers 20 and a lens 26 in perpendicular direction, a reflected light from the substrate 20 is transmitted to a spectrograph 42 through the lens 26 and another 24 of the optical fibers 20, the spectrograph 42 splits the light reflected from a surface of a sample on the substrate 30 according to the intensity of each wavelength, and the split light goes into an optical measuring element arrangement 44 so that the luminance intensity at each wavelength is supplied to a computer 46. The computer 46 can measure the thickness of the thin film by using a variety of ways by using the luminance intensity at each wavelength as spectrum data.

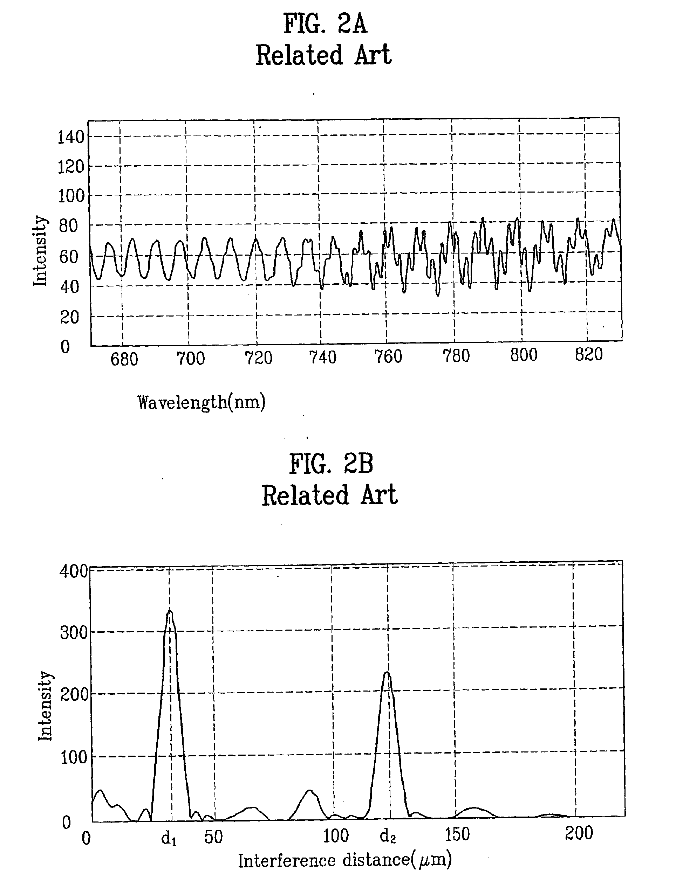

FIGs. 2A and 2B are views illustrating a case that the refractive index is applied when the thickness is measured by the conventional method, FIG. 2A is a graph showing a luminous intensity data spectrum at each wavelength supplied to a computer according to the conventional method, and FIG. 2B is a graph of Fast Fourier Transform of the reflectivity spectrum by using FIG. 2A.

As illustrated in FIGs. 2A and 2B, since $\Delta\lambda$ can be selected, where the thickness d of a specific layer is proportional to m times with respect to a specific wavelength $\lambda$ and m-1 times with respect to near wavelength $\lambda+\Delta\lambda$, the thickness d of a specific layer in the spectrum data according to the refractive index can be represented the following equation 1.

[Equation 1]

At the condition $\Delta\lambda \ll \lambda$,

$2nd = m\lambda = (m-1)(\lambda + \Delta\lambda)$, and if expanded,

$m\lambda = (m-1)(\lambda + \Delta\lambda) = m\lambda + m\Delta\lambda - (\lambda + \Delta\lambda)$

$m\Delta\lambda = \lambda + \Delta\lambda$

therefore, becomes $m = (\lambda + \Delta\lambda)/\Delta\lambda$,
where, $2nd=m\lambda=\lambda(\lambda+\Delta\lambda)/\Delta\lambda\approx\lambda^2/\Delta\lambda=1/\Delta(1/\lambda)$.

Since multiplication 2nd and $\Delta(1/\lambda)$ is 1 (one), if, in the experiment, a relationship function between the reflectivity intensity and $\Delta(1/\lambda)$ can be obtained, an FFT function with respect the 2nd corresponding to transform factor of $\Delta(1/\lambda)$ by taking the FFT wholly.

Where, a d value where a peak appears is the thickness we wish to obtain.

For reference, the description for the FFT is represented to a generalized equation as follows.

A relationship equation between the intensity I and the wavelength $\lambda$ becomes $I = f(\lambda) = g(\Delta(1/\lambda))$.

If applying the FFT to both sides, then the equation can be expressed as following equation 2.

[Equation 2]

$$FFT\{I\} = FFT\left\{g\left(\Delta\left(\frac{1}{\lambda}\right)\right)\right\} = \int g\left(\Delta\left(\frac{1}{\lambda}\right)\right)e^{-2\pi i\left(\Delta\left(\frac{1}{\lambda}\right)\right)2nd}d(2nd) = h(2nd).$$

However, since the conventional method does not consider the refractive index dispersion of thin film material, the gap between peaks decreases gradually. More especially, according to the conventional art, there are disadvantages that since the refractive index is varied by depending upon the wavelength, thickness values obtained according to the refractive index for dividing a Fourier peak position are varied and reduction of size and increment of a width of the peak are caused.

Thus, since the materials consist of an actual thin film has a wavelength dependency of the refractive index, that is, since there is a refractive index dispersion of the thin film, the energy difference by the interference between two lights at a frequency period is not uniform. With this reason, the width of the peak of the frequency that is obtained when the Fast Fourier Transform of the reflective spectrum is wider according to degree of the refractive index dispersion, and the measuring error for obtaining the thickness of the thin film because of the imprecise position of the peak is increase. Therefore, in order to precisely measure the thickness of the thin film, the refractive index dispersion should be considered.

Accordingly, the present invention is directed to a method for measuring thickness of an optical disc that substantially obviates one or more problems due to limitations and disadvantages of the related art.

An object of the present invention is to provide a method for high precisely measuring thickness of an optical disc with a rapid speed by using a position of peak value of a reflected light in an interference area obtained by Fast Fourier Transform of a variation of refractive index according to a wavelength, that is, a spectrum being reflected with the refractive index as a function of the wavelength.

Another object of the present invention is to provide an improved method for high precisely measuring thickness of an optical disc by keeping accuracy of determining a peak position as well as preventing the expansion of a width of the peak when the Fourier Transform even when a reflecting film is formed on a substrate at a uniform area ratio by a reflective light or multiple thin films are formed on the substrate.

Another object of the present invention is to provide a method for precisely measuring thickness of an optical disc to be applicable not only a reflective index spectrum but also any other spectrum vibrated by an interference of a thick thin film such as a transmittance spectrum.

The invention is defined in appended claim 1.

## Brief Description of the Drawings

Further objects and advantages of the invention can be more fully understood from the following detailed description taken in conjunction with the accompanying drawings, in which:

FIG. 1 illustrates a schematic construction of an apparatus for measuring thickness of a thin film of an optical disc according to a related art;

FIG. 2A illustrates a graph showing a luminous intensity in each wavelength supplied to a computer according to the related art;

FIG. 2B illustrates a graph of Fast Fourier Transform of the reflectivity spectrum by using FIG. 2A.

FIG. 3 illustrates a flowchart showing a method for measuring thickness of an optical disc according to the present invention;

FIG. 4 illustrates a lateral constructive view of an optical disc for a High Density-DVD;

FIG. 5A illustrates a graph showing spectrum data by wavelength by measuring an intensity of a reflective light according to a wavelength of a light according to the present invention;

FIG. 5B illustrates a graph setting the reflective light as a vertical axis and a value that a refractive index is reflected by a function of a wavelength as a horizontal axis by using FIG. 5A;

FIG. 5C illustrates a Fast Fourier Transform graph of the spectrum by wavelength by using FIG. 5B;

FIG. 6 illustrates a graph showing a refractive index dispersion curve of a dielectric thin film with a thickness $30\mu m$; and

FIGs. 7A and 7B illustrate graphs showing intervals between the reflective spectrums with respect to energy through whether the refractive index dispersion of the dielectric thin film is considered or not.

## Best mode for Currying Out the Invention

To achieve these objects and other advantages and in accordance with the purpose of the invention, as embodied and broadly described herein, a method for measuring thickness of an optical disc by using an interference effect of the optical disc layer, includes the steps of detecting an intensity of a reflective light according to a wavelength of a light as a spectrum data for each wavelength, converting the detected spectrum data for each wavelength into a spectrum value as a function of a wavelength that a refractive index is reflected, and detecting a position where the intensity of the reflective light has a peak as a thickness of a spacer layer and a cover layer respectively by converting the converted value into a length of an interference area for representing a layer thickness of the optical disc by the Fast Fourier Transform.

In another aspect of the present invention, the spectrum value as a function of a wavelength that a refractive index is reflected prefers to be $n(\lambda)/2\lambda$.

Reference will now be made in detail to the preferred embodiments of the present invention, examples of which are illustrated in the accompanying drawings. Wherever possible, the same reference numbers will be used throughout the drawings to refer to the same or like parts.

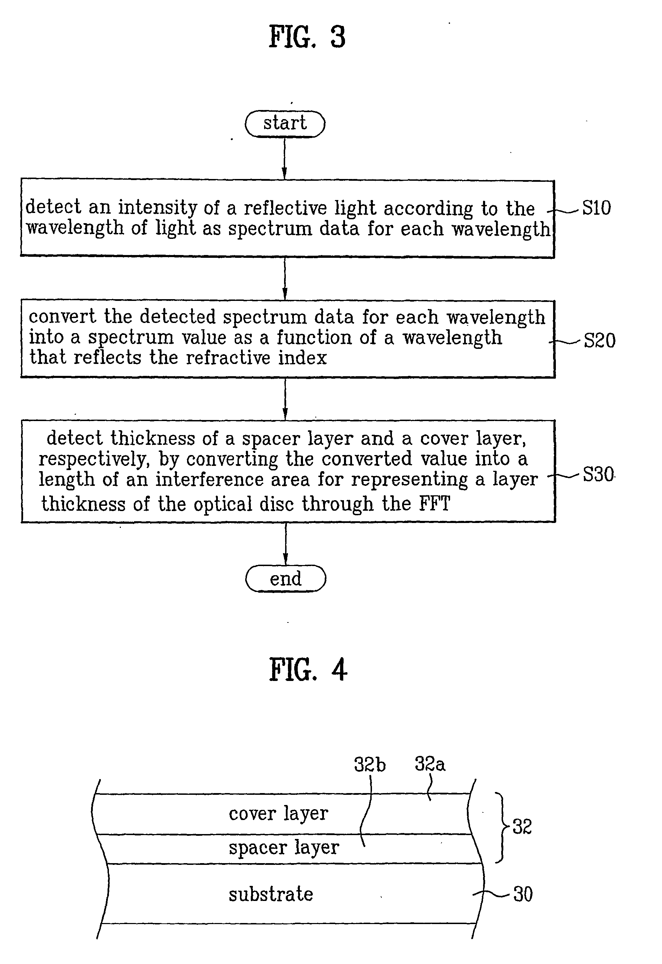

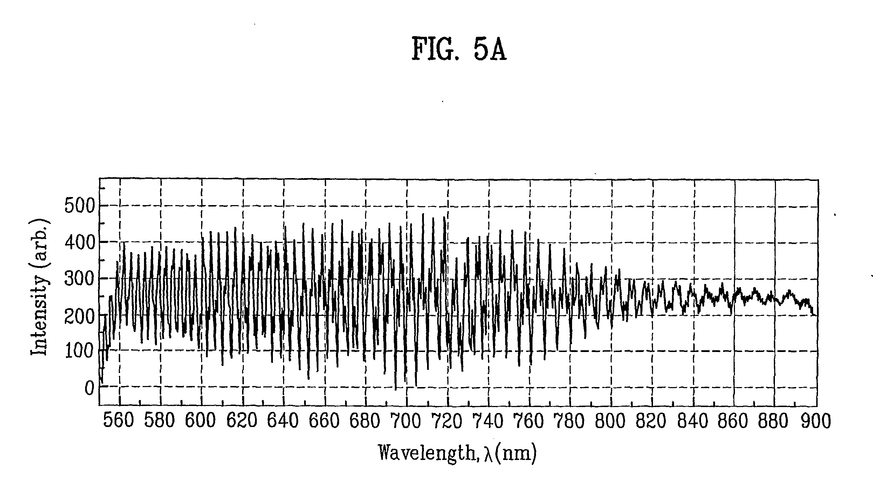

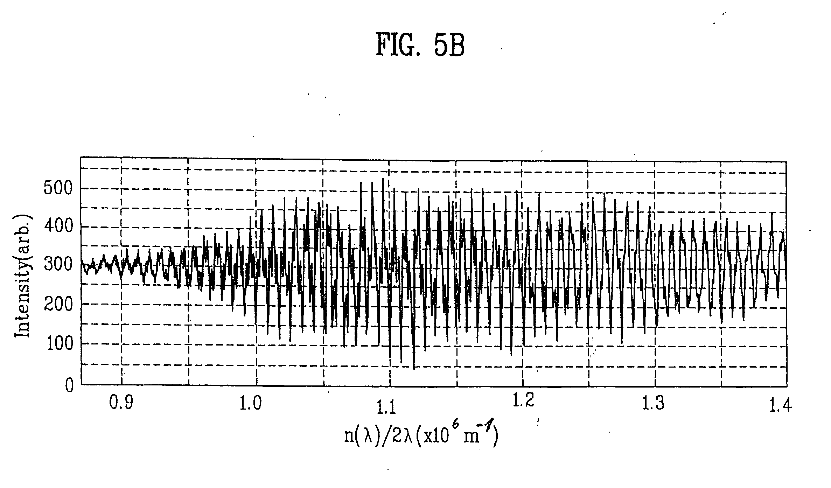

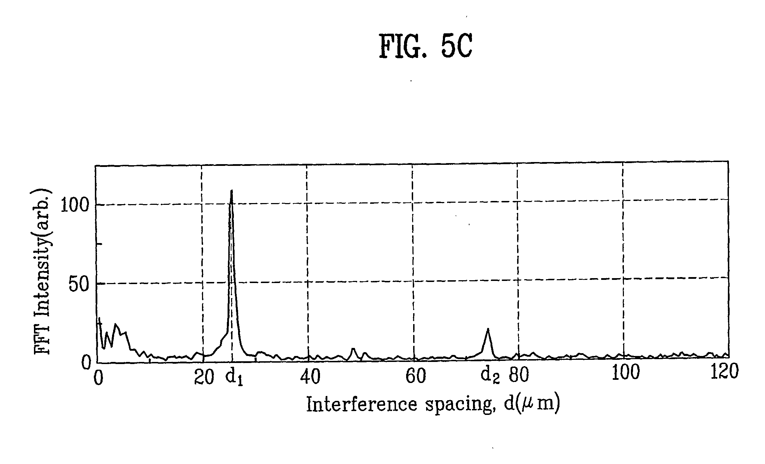

FIG. 3 illustrates a flowchart showing a method for measuring thickness of an optical disc according to the present invention, FIG. 4 illustrates a lateral constructive view of an optical disc for a High Density-DVD, FIG. 5A illustrates a graph showing spectrum data by wavelength by measuring an intensity of a reflective light according to a wavelength of a light according to the present invention, FIG. 5B illustrates a graph setting the reflective light as a vertical axis and a value that a refractive index is reflected by a function of a wavelength as a horizontal axis by using FIG. 5A, and FIG. 5C illustrates a Fast Fourier Transform graph of the spectrum by wavelength by using FIG. 5B.

FIG. 4 illustrates the optical disc for a High Density DVD (hereinafter referred to 'HD-DVD') appeared before the footlights as a next generation optical recording medium recent. As illustrated in FIG. 4, major layers of the HD-DVD are a cover layer (CL) 32a of thickness about $80\mu m$ and a spacer layer (SL) 32b having thickness of $10\mu m$, below the cover layer 32a.

A non-claimed apparatus for measuring thickness of the optical disc, as illustrated in FIG. 1, includes a light source, an optical fiber, a lens, a substrate with a thin film, a monochromator, an optical measuring element arrangement, and a computer.

By using the optical disc thickness measuring apparatus constructed as described above, the thickness of the HD-DVD used as a sample for measurement is detected as spectrum data by wavelength by detecting an intensity of the reflective light according to the wavelength of the light (Step S10). The detected data are illustrated in FIG. 5A.

Before the Fast Fourier Transform for the thickness measurement, taking that the refractive index varies according to the wavelength into consideration, the detected spectrum data by wavelength is converted into spectrum data that the refractive index is reflected into the function of wavelength (Step S20). At that time, an equation for processing the spectrum that the refractive index is reflected into the function of wavelength can be expressed the following equation 3.

[Equation 3]

$$2n(\lambda)d = m\lambda$$

$$2n(\lambda + \Delta\lambda)d = (m-1)(\lambda + \Delta\lambda)$$

If developing the above second equation, then

$$2n(\lambda)d + 2\Delta n \ d = m\lambda + m\Delta\lambda - \lambda - \Delta\lambda$$

where, $\Delta n = n(\lambda + \Delta\lambda) - n(\lambda)$, if substituting the upper equation into the first equation and developing the substituted first equation, then

$$m = (2\Delta nd / \Delta\lambda) + (\lambda + \Delta\lambda)/ \Delta\lambda \ \Rightarrow \ \text{if substituting the first equation, then}$$

$$2n(\lambda)d = (2\lambda\Delta nd / \Delta\lambda) + ((\lambda + \Delta\lambda)\lambda / \Delta\lambda)$$

$$2(n(\lambda) - \lambda\Delta n / \Delta\lambda)d = (\lambda + \Delta\lambda)\lambda / \Delta\lambda$$

$$(2\lambda^2 / \Delta\lambda)((n(\lambda)\Delta\lambda - \lambda\Delta n) / \lambda^2)d = (\lambda + \Delta\lambda)\lambda / \Delta\lambda$$

$$2\Delta(n(\lambda) / \lambda)d = (\lambda + \Delta\lambda)/ \lambda = 1 + \Delta\lambda / \lambda \approx 1(\Delta\lambda / \lambda << 1)$$

where, the latest term can be neglected by applying a first order approximation.

By using function relationship with respect to $\Delta(n(\lambda)/\lambda)$ of the intensity of the light obtained according to the equation as described above, the apparatus can obtain the spectrum data that the refractive index is reflected into the function of wavelength, where FIG. 5B illustrates a graph setting the reflective light as a vertical axis and a value $n(\lambda)/2\lambda$ that a refractive index is reflected by a function of a wavelength as a horizontal axis.

Finally, if the converted data in the previous step is converted into a length of an interference area for representing the thickness of the optical disc through the Fast Fourier Transform, then a position where the intensity of the reflected light has a peak value. The position of each detected peak value becomes the thickness of the spacer layer and the cover layer (Step S30).

FIG. 5C illustrates a graph of takes a vertical axis as the intensity of the light by the Fast Fourier Transform and a horizontal axis as the interference area representing the thickness.

As illustrated in FIG. 5C, a peak value appeared at a position of $d_1$ on the horizontal axis is a value appeared when a refractive index $n_1$ with respect to the spacer layer is expressed as a function of wavelength of $n_1(k)$ and converted by the Fast Fourier Transform, and a value of a position where the peak value appears represents the thickness of the spacer layer of the optical disc. Meanwhile, a peak value appeared at a position of $d_2$ on the vertical axis is a value appeared when a refractive index $n_2$ with respect to the cover layer is expressed as a function of wavelength of $n_2(\lambda)$ and converted by the Fast Fourier Transform, and a value of a position where the peak value appears represents the thickness of the cover layer of the optical disc.

The measurement of the thickness of the optical disc by using the Fast Fourier Transform by reflecting the refractive index into a function of wavelength according to the present invention will be described in detail through experimental values by using the thickness of the thin film.

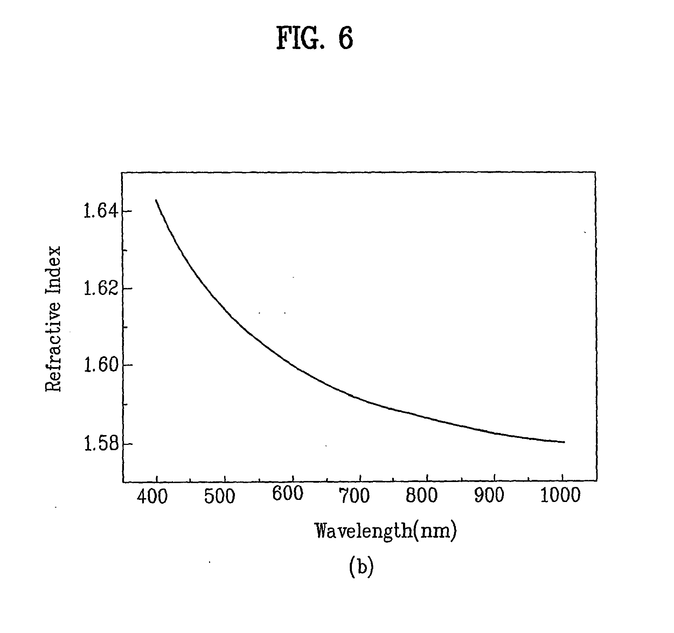

FIG. 6 illustrates a graph showing a refractive index dispersion curve of a dielectric thin film with a thickness 30μm.

As illustrated in FIG. 6, by reflecting the refractive index dispersion when the Fast Fourier Transform is performed, it can be understood that the peak width decreases and the peak size increases through the reflectivity spectrum analysis by the dielectric thin film with a thickness of 30μm. At that time, the dielectric thin film is defined as sole thin film to exist in ambient without a substrate layer for supporting the dielectric thin film.

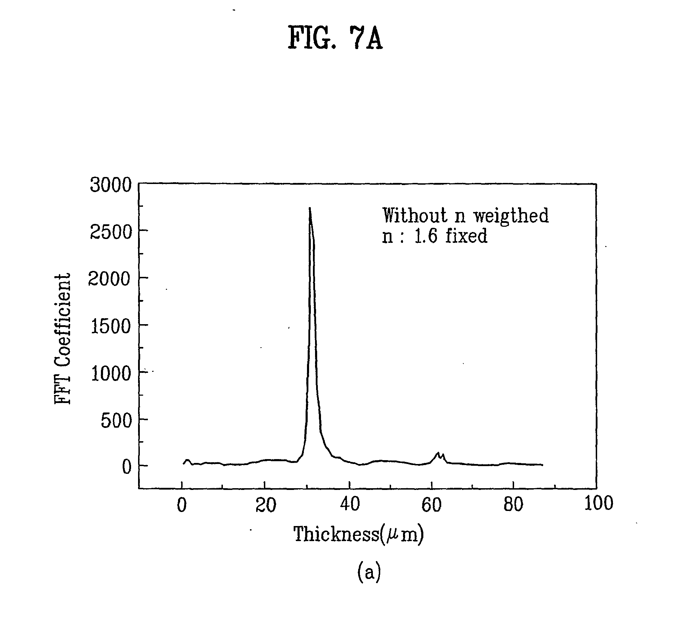

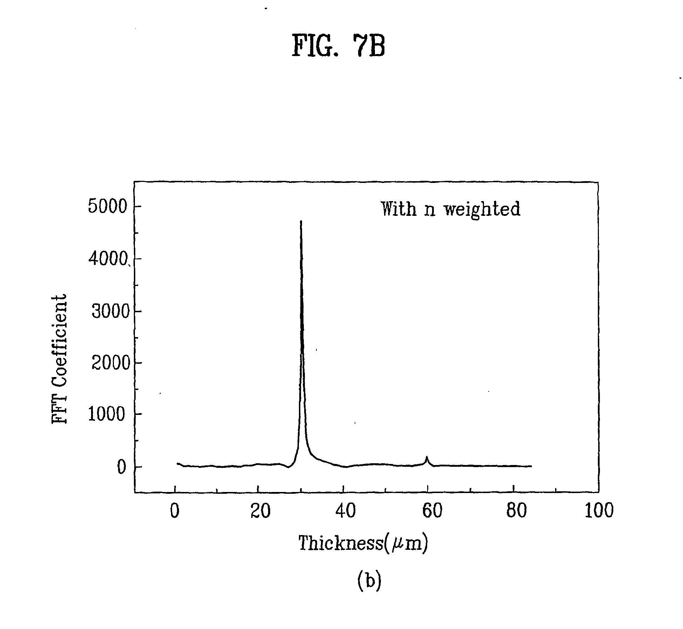

This fact appears more remarkably after performing the Fast Fourier Transform to cases whether the refractive index is reflected or not. Referring to FIGs. 7A and 7B, FIG. 7A illustrates a Fast Fourier Transform graph of the reflective spectrum when the refractive index dispersion of the dielectric thin film is not considered, and FIG. 7B illustrates a Fast Fourier Transform graph of the reflective spectrum when the refractive index dispersion of the dielectric thin film is reflected as a function of wavelength.

As illustrated in FIGs. 7A and 7B, in a Fast Fourier Transform graph when the refractive index dispersion is reflected, the peak width largely decreases from 1.61μm to 0.44μm, while the peak size increases about 1.7 times. These increment of the peak size and decrement of the peak width are reasonable from which a vibration interval of the reflective index spectrum, becomes uniform when the refractive index dispersion is reflected so that clearly represents the effect of the Fast Fourier Transform considering the refractive index.

Another effect obtained when the refractive index dispersion is considered appears at a thickness value obtained after the Fast Fourier Transform. FIG. 7A illustrates the graph representing the horizontal axis with the thickness by fixing the refractive index to n=1.6 and performing the Fast Fourier Transform. Since the dielectric thin film has different refractive index according to the wavelength as illustrated in FIG. 6, the obtained thickness value varies according to the refractive index for dividing a Fourier peak position.

Therefore, that the thickness value 30.71μm estimated from the peak in FIG. 7A is different from the actual thickness 30μm. The difference between the actual thickness and the estimated thickness, 0.71μm, is caused by which the used refractive index n=1.6 does nor reflect properly an effective refractive index of the reflectivity spectrum ranges the region of 500nm to 900nm, and can be regarded an error basically comes from not taking the refractive index dispersion into consideration.

However, since the refractive index dispersion is precisely reflected in FIG. 7B illustrating the Fast Fourier transform graph for considering the refractive index dispersion, a precise thickness value of 30.0μm is estimated so that a rapid analyzing speed and a high precise thickness measurement can be achieved.

## Industrial applicability

As described above, the method for measuring thickness of an optical disc by using the interference effect of the optical disc's layer has advantages as follows.

First, in the measurement of the thickness of the optical disc through the peak value position of the reflected light in the interference area obtained by the Fast Fourier Transform of the reflectivity spectrum in which the refractive index dispersion of the thin film is reflected by adding an extra refractive index, the measurement of the thickness of the optical disc can be performed precisely during keeping a rapid analyzing speed so that the reliability of the measuring apparatus can be increased and the productivity can be also enhance.

Second, according to the present invention, regardless of type and structure of the disc, a reflective layer of uniform area ratio formed on a substrate, or multiple layer thin film formed on the substrate, the thickness of the optical disc can be measured with a high precision and a rapid analyzing speed as well as the measuring method of the present invention can be applied to a spectrum having a vibration by the interference of the thick thin film such as a transmittance spectrum, so that through demands for demanding a real-time measurement and a precise analysis from the industries can be corresponded by means of the rapid analyzing speed and the high precise measurement of the thickness of the optical disc, and the competition power in the local and abroad markets can be enhanced.

It will be apparent to those skilled in the art than various modifications and variations can be made in the present invention. Thus, it is intended that the present invention covers the modifications and variations of this invention provided they come within the scope of the appended claims.

## Claims

1. A method for measuring a thickness of two layers of an optical disc that includes a spacer layer (32b) and a cover layer (32a) by using an interference effect of an optical disc layer, the method comprising the steps of:

   - detecting an intensity of a reflected light according to each wavelength as a first spectrum of data;

- converting the first spectrum data into a second spectrum as a function of wavelength and refractive index of the spacer layer (32b) and converting the first spectrum data into a second spectrum as a function of wavelength and refractive index of the cover layer (32a), the spacer layer (32b) and the cover layer (32a) overlaying each other, the second spectrum (32a) being a function of $n(\lambda)/2\lambda$, where n is the index of refraction and $\lambda$ is wavelength;
- transforming the second spectrum of the spacer layer and the second spectrum of the cover layer using a Fast Fourier Transform; and
- detecting the thickness of each of the spacer layer (32b) and the cover layer (32a) based upon the transformed spectra of the spacer layer and cover layer.

2. The method of claim 1, wherein the spacer layer (32b) has a refractive index $n_1$ and the cover layer (32a) has a refractive index $n_2$ different from the refractive index $n_1$.

3. The method of claim 2, wherein peak values of intensity of the transformed spectrum at positions $d_1$ and $d_2$ indicate $d_1$ and $d_2$ as being the thicknesses of respective layers.

4. The method of claim 1, wherein in said converting step, an equation for processing the first spectrum is expressed as follows:

$$2n(\lambda)d = m\lambda$$

$$2n(\lambda + \Delta\lambda)d = (m-1)(\lambda + \Delta\lambda)$$

wherein, d is a thickness, n is a refractive index of the optical disc layer, $\lambda$ is wavelength, and m is integer value.

5. The method of claim 1, wherein the transformed spectrum represents intensity as a function of an interference spacing (d), and the interference spacing (d) represents a thickness of a given layer.

**Patentansprüche**

1. Verfahren zum Messen einer Dicke von zwei Schichten einer optischen Disk, die eine Abstandsschicht (32b) und eine Deckschicht (32a) enthält, unter Nutzung eines Interferenzeffekts einer optischen Diskschicht, wobei das Verfahren folgende Schritte umfasst:

- Detektieren einer Intensität eines reflektierten Lichts gemäß jeder Wellenlänge als ein erstes Spektrum von Daten;
- Konvertieren der ersten Spektrumdaten in ein zweites Spektrum als eine Funktion von Wellenlänge und Brechungsindex der Abstandsschicht (32b) und Konvertieren der ersten Spektrumdaten in ein zweites Spektrum als eine Funktion von Wellenlänge und Brechungsindex der Deckschicht (32a), wobei die Abstandsschicht (32b) und die Deckschicht (32a) übereinander liegen, wobei das zweite Spektrum (32a) eine Funktion von $n(\lambda)/2\lambda$ ist, wobei n der Brechungsindex ist und $\lambda$ die Wellenlänge ist;
- Umwandeln des zweiten Spektrums der Abstandsschicht und des zweiten Spektrums der Deckschicht mittels einer Schnellen Fouriertransformation; und
- Erfassen der Dicke sowohl der Abstandsschicht (32b) als auch der Deckschicht (32a) auf der Grundlage der umgewandelten Spektren der Abstandsschicht und der Deckschicht.

2. Verfahren gemäß Anspruch 1, wobei die Abstandsschicht (32b) einen Brechungsindex $n_1$ hat und die Deckschicht (32a) einen Brechungsindex $n_2$ hat, der von dem Brechungsindex $n_1$ verschiedenen ist.

3. Verfahren gemäß Anspruch 2, wobei Spitzenwerte der Intensität des umgewandelten Spektrums an Positionen $d_1$ und $d_2$ $d_1$ und $d_2$ als die Dicken jeweiliger Schichten anzeigen.

4. Verfahren gemäß Anspruch 1, wobei in dem Konvertierungsschritt eine Gleichung zum Verarbeiten des ersten Spektrums folgendermaßen ausgedrückt ist:

$$2n(\lambda)d = m\lambda$$

$$2n(\lambda + \Delta\lambda)d = (m - 1)(\lambda + \Delta\lambda),$$

wobei d eine Dicke ist, n ein Brechungsindex der optischen Diskschicht ist, $\lambda$ die Wellenlänge ist und m ein ganzzahliger Wert ist.

**5.** Verfahren gemäß Anspruch 1, wobei das umgewandelte Spektrum die Intensität als eine Funktion einer Interferenzbeabstandung (d) darstellt und die Interferenzbeabstandung (d) eine Dicke einer bestimmten Schicht darstellt.

**Revendications**

**1.** Procédé de mesure d'une épaisseur de deux couches d'un disque optique qui comprend une couche d'espacement (32b) et une couche de recouvrement (32a) en utilisant un effet d'interférence d'une couche de disque optique, le procédé comprenant les étapes suivantes :

- détecter une intensité d'une lumière réfléchie en fonction de chaque longueur d'onde en tant que premières données de spectre ;
- convertir les premières données de spectre en un second spectre en fonction de la longueur d'onde et de l'indice de réfraction de la couche d'espacement (32b) et convertir les premières données de spectre en un second spectre en fonction de la longueur d'onde et de l'indice de réfraction de la couche de recouvrement (32a), la couche d'espacement (32b) et la couche de recouvrement (32a) se superposant l'une l'autre, le second spectre (32a) étant une fonction de n($\lambda$)/2$\lambda$, où n est l'indice de réfraction et $\lambda$, est une longueur d'onde ;
- transformer le second spectre de la couche d'espacement et le second spectre de la couche de recouvrement au moyen d'une Transformée de Fourier Rapide ; et
- détecter l'épaisseur de chacune de la couche d'espacement (32b) et de la couche de recouvrement (32a) sur la base des spectres transformés de la couche d'espacement et de la couche de recouvrement.

**2.** Procédé selon la revendication 1, dans lequel la couche d'espacement (32b) a un indice de réfraction $n_1$ et la couche de recouvrement (32a) a un indice de réfraction $n_2$ différent de l'indice de réfraction $n_1$.

**3.** Procédé selon la revendication 2, dans lequel les valeurs de crête de l'intensité du spectre transformé aux positions $d_1$ et $d_2$ indiquent $d_1$ et $d_2$ comme étant les épaisseurs des couches respectives.

**4.** Procédé selon la revendication 1, dans lequel dans ladite étape de conversion, une équation pour traiter le premier spectre s'exprime comme suit :

$$2n(\lambda)d = m\lambda$$

$$2n(\lambda + \Delta\lambda)d = (m - 1)(\lambda + \Delta\lambda)$$

dans laquelle d est une épaisseur, n est un indice de réfraction de la couche de disque optique, $\lambda$ est une longueur d'onde et m est une valeur entière.

**5.** Procédé selon la revendication 1, dans lequel le spectre transformé représente l'intensité en fonction d'un espacement d'interférence (d) et l'espacement d'interférence (d) représente une épaisseur d'une couche donnée.

# FIG. 1
# Related Art

spectrograph 42

optical measuring
element
arrangement

44

46

12

halogen
lamp

22

24

20

26

32

substrate 30

## FIG. 2A
## Related Art

Wavelength(nm)

## FIG. 2B
## Related Art

Interference distance($\mu$m)

# FIG. 3

```
         ( start )
             │
             ▼
┌───────────────────────────────────────────────┐
│ detect an intensity of a reflective light      │── S10
│ according to the wavelength of light as        │
│ spectrum data for each wavelength              │
└───────────────────────────────────────────────┘
             │
             ▼
┌───────────────────────────────────────────────┐
│ convert the detected spectrum data for each    │
│ wavelength into a spectrum value as a          │── S20
│ function of a wavelength that reflects the     │
│ refractive index                               │
└───────────────────────────────────────────────┘
             │
             ▼
┌───────────────────────────────────────────────┐
│  detect thickness of a spacer layer and a      │
│ cover layer, respectively, by converting the   │
│ converted value into a length of an            │── S30
│ interference area for representing a layer     │
│ thickness of the optical disc through the FFT  │
└───────────────────────────────────────────────┘
             │
             ▼
         (  end  )
```

# FIG. 4

```
                         32b      32a
                          │        │
        ┌─────────────────┼────────┼──────────┐ ┐
        │         cover layer                 │ │
        ├─────────────────────────────────────┤ ├ 32
        │         spacer layer                │ │
        ├─────────────────────────────────────┤ ┘
        │          substrate                  │ ── 30
        └─────────────────────────────────────┘
```

# FIG. 5A

EP 1 636 541 B1

# FIG. 5B

EP 1 636 541 B1

FIG. 5C

EP 1 636 541 B1

FIG. 6

(b)

# FIG. 7A

Without n weigthed
n : 1.6 fixed

FFT Coefficient

Thickness($\mu$m)

(a)

# FIG. 7B

(b)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6172756 B2

- WO 03025497 A1

**Non-patent literature cited in the description**

- **VOLKER LANGE et al.** Reflexionsinterferometrie zur Kontrolle dünner Silizium-Membranen. *Technisches Messen,* 1994, vol. 61 (9), 346-351